# EUROPEAN PATENT APPLICATION

(11) **EP 0 556 468 A2**
(43) Date of publication of application: **25.08.1993**
(21) Application number: 92120788.2
(22) Date of filing: 05.12.1992
(51) Int. Cl.: B60R 11/02, B60R 25/10

(54) **A safety apparatus for an auxiliary electronic device fitted on board a means of locomotion**

(30) Priority: 11.12.1991 IT MI913328
(71) Applicant: DELTA ELETTRONICA s.p.a., I-21100 Varese (VA) (IT)
(72) Inventor: Memmola, Serafino c/o DELTA ELETTRONICA S.p.A., I-21100 Varese (IT)
(74) Representative: Ferraiolo, Ruggero

(57) **Abstract**

The functions of an auxiliary electronic device, such as a car-radio (2), are subjected to receiving a coded signal sent by a control module (1), the car-radio/control module couple are associated to an individual and exclusive identifying activation code such that, if the car-radio (2) receives a signal that does not respond to its own identifying activation code, or if it receives no signal, the functions of the car-radio (2) are inhibited (fig. 1).

## Description

The present invention concerns a safety apparatus for an auxiliary electronic device such as a car-radio, or a cassette or compact disk player set, or a car-phone, fitted on board a means of locomotion such as a car, a truck, a motor-boat, more particularly an apparatus that serves as a deterrent or, better, as a protection against the theft of said device.

Because the most common use for this invention concerns car-radios fitted onto vehicles, henceforth we shall simply define the means of locomotion on which the device is fitted as -vehicle- and the device itself as -car-radio-. Nowadays one of the more common safety measures for the protection of car-radios is simply that of removing the same car-radio or part of it, such as the control panel, every time the driver leaves the vehicle. Although the method is safe, it is, rather obviously, inconvenient. Other methods employed consist in activating the car-radio by means of magnetic cards, or by digiting a secret code on the car-radio's panel. These methods are also somewhat inconvenient owing to the fact that the driver must always carry the magnetic card with him, or else remember the secret code and input it every time he leaves or returns to the vehicle.

The safety apparatus invented, as characterized in the claims herein, subjects the functions of the car-radio, fitted onto a vehicle, to an encoded activation signal. sent by a control module.

Each car-radio manufactured is assigned its corresponding control module; the car-radio/control module couple is associated to an individual and exclusive identifying activation code. If the coded signal received by the car-radio does not correspond to its identifying activation code or if no coded signal is received, the car-radio functions are inhibited.

A possible improvement of the safety apparatus is as follows: the car-radio responds to the coded signal sent by the control module if the code is correct, thus confirming to the same control module that the car-radio is present on board the vehicle; the response from the car-radio to the control module takes-place via an appropriate coded signal, for instance the same identifying code as the car-radio/control module couple.

If the control module receives no coded signal as a response, or receives an incorrect code, it enables, directly or by means of another device, a luminous and/or acoustic and/or other signal.

The control module is to be fitted inside the vehicle in a position difficult to access.

One of the possible applications, mentioned purely as an example and illustrated herein with reference to one of the drawings consists in integrating the control module into the central unit of an alarm system.

The main advantage of the apparatus invented lies in the freedom to leave the car-radio on board when leaving the vehicle, in as much as a convenient signal, luminous and/or acoustic, informs the would be thief that the car-radio is protected.

Figures 1, 2 and 3 are block diagrams showing three embodiments of the apparatus invented.

Figure 4 is the electric diagram of the part relative to the receiver of the apparatus invented.

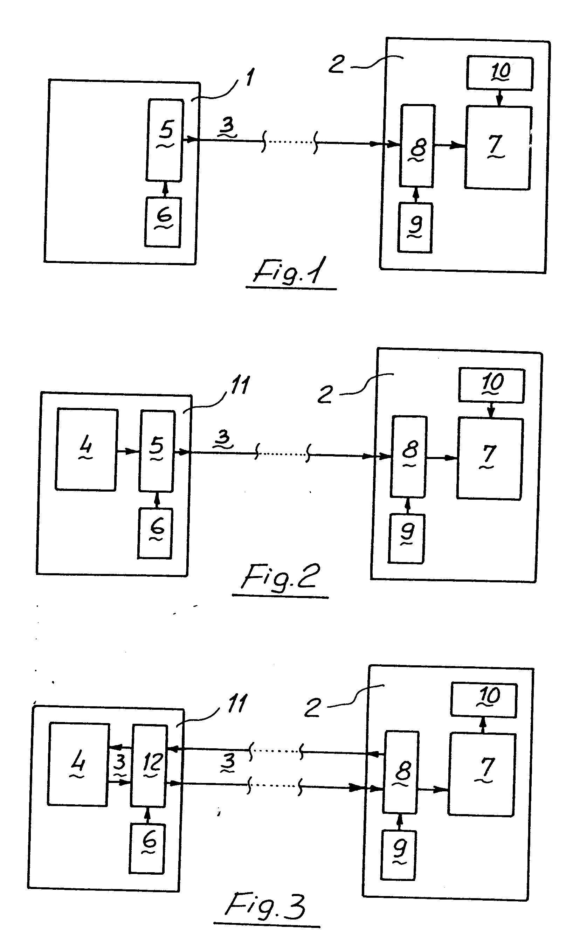

Fig. 1 shows: a control module 1 of an auxiliary electronic device represented by a car-radio 2 and an electric connection 3 between said parts 1 and 2; the control module 1 comprises an encoder-transmitter circuit 5 and a non-volatile memory 6; circuit 5 is suitable for transmitting to car-radio 2 the coded signal contained in memory 6 (this memory may be realized with any of the known appropriate technologies, for example by means of a connection matrix, a diode matrix, or a PROM, EPROM EEPROM); the car-radio 2 comprises its own control logic 7, a receiver-decoder circuit 8, a non-volatile memory 9 and an apparatus active indicator 10, circuit 8 is able to receive the coded signal transmitted by circuit 5, compare it with the identifying code contained in the non-volatile memory 9 in order to enable the control logic 7 and thus the car-radio 2 functions as long as the received coded signal is correct, while, if the received coded signal is incorrect, or if the electric connection 3 is interrupted or connected to fixed voltage levels, then circuit 8 keeps the control logic 7 dis-enabled thus inhibiting the car-radio functions.

Fig. 2 shows an apparatus that differs from the one illustrated in Fig. 1 in that it introduces a conventional car theft alarm system 11 for the vehicle instead of the control module 1; this alarm system device 11 comprises a control logic 4, an encoder-transmitter 5 and a non-volatile memory 6; it is said control logic 4 that forces said circuit 5 to transmit the coded signal contained in the non-volatile memory 6 to said receiver-decoder circuit 8. In other words, when the driver enables the alarm system 11 fitted on the vehicle, the safety device protecting the car-radio 2 is also enabled.

Fig. 3 shows an apparatus that differs from that illustrated in Fig. 2 owing to the following additional characteristics: a) an encoder-transmitter and receiver-decoder circuit 12 able to transmit the coded signal contained in memory 6 of said device 11 and able to receive the coded response signal transmitted by car-radio 2, and enable, by means of said central logic 4, an alarm signal as long as the -receiver- part of aid circuit 12 does not receive any coded response signal or if the response signal received is in an incorrect code; b) a receiver-decoder and encoder-transmitter circuit that, apart from operating as said with reference to Fig.1 for circuit 8, also transmits the coded response signal from the car-radio 2; c) a double electric connection 3 between parts 1 and 2 and between parts 4 and 12 that serves the purpose of sending the car-radio 2 the coded signal contained in memory 6 of said alarm device 1, in order to enable or not the car-radio 2 and to send a response signal from the car-radio 2 to alarm device 1.

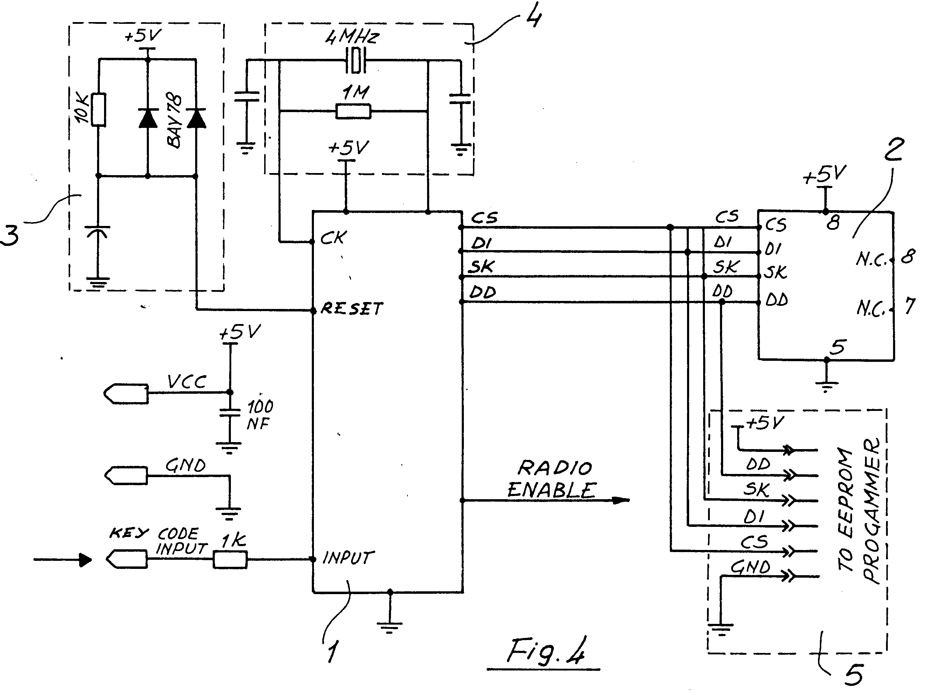

Fig. 4 is an easily readable diagram for an expert in the field of the -receiver- part of the receiver-decoder 8 in which the following are shown: a COP822 National micro-controller 1 which serves as a receiver-decoder, a EEPROM 93C46 non-volatile memory 2, an initialization circuit 3, an oscillator (clock) circuit 4 to synchronize the micro-controller signals, and a connector 5 to program the established codes in the EEPROM memory.

The diagram for the transmitter 5 is not provided as any expert in the field is able to construct one easily.

## Claims

1. Safety apparatus for an auxiliary electronic device (2) fitted onto a means of locomotion characterized in that said auxiliary electronic device (2) is associated to a control module (1) comprising an encoder-transmitter circuit (5) able to transmitting to said device (2) a coded signal contained in its own non-volatile memory (6) and said auxiliary electronic device (2) comprises its own control logic (7), a receiver-decoder circuit (8), a non-volatile memory (9) and an indicator (10) that the apparatus is enabled, the receiver-decoder circuit being suitable for receiving a coded signal transmitted by said encoder-transmitter circuit and comparing it with the identifying code contained in said memory (9) of said auxiliary electronic device (2) in order to enable its control logic (7), and with it the functions of the auxiliary electronic device (2) as long as the coded signal received is correct, while if the coded signal received is incorrect or if the electric connection (3) between said control module (1) and said auxiliary electronic device (2) is interrupted or connected to fixed voltage levels, then said receiver-decoder circuit (8) keeps the control logic (7) of said auxiliary electronic device (2) inactive.

2. A Safety apparatus according to claim 1 characterized in that a car theft alarm system (11) for the means of locomotion performs the functions of said control module (1) comprising a control logic (4), an encoder-transmitter circuit (5) and a non-volatile memory (6), in order that said control logic (4) forces the encoder-transmitter (5) to transmit to said receiver-decoder circuit (8) of said auxiliary electronic device (2) the coded signal contained in said non.-volatile memory (6), so that when an operator enables the car theft alarm system (11) the safety apparatus is also enabled.

3. A safety apparatus according to claim 2 characterized in that: said car theft alarm system (11) comprises an encoder-transmitter and receiver-decoder (12) circuit able to transmit the coded signal contained in said non-volatile memory (6) controlled by said logic (4) and to receiver the coded response signal transmitted by said auxiliary electronic device (2), by means of said control logic (4) enable n alarm signal as long as the -receiver- part of said encoder-transmitter and receiver-decoder (12) does not receive any coded response signal or if the response signal is in an incorrect code; that said receiver-decoder (8) is also able to transmit the response signal in the code of said auxiliary electronic device (2), that said auxiliary electronic device (2), said car theft alarm system (11) and said encoder transmitter and receiver-decoder circuit (12) are connected in order to send said auxiliary electronic device (2) the coded signal contained in said non-volatile memory (6) of said alarm system (11) in order to enable or not said auxiliary electronic device (2) and to send a response signal from this last device (2) to said alarm system (11).
